# EUROPEAN PATENT APPLICATION

(11) **EP 0 999 511 A1**
(43) Date of publication of application: **10.05.2000**
(21) Application number: 99650012.0
(22) Date of filing: 05.02.1999
(51) Int. Cl.: G06F 17/60, G06F 15/02

(54) **A method and system for implementing currency calculations in a computer system**

(71) Applicant: Bray, Manus, Dublin 15 (IE); Chisholm, William, Blessington, Co. Wicklow (IE)
(72) Inventor: Bray, Manus, Dublin 15 (IE); Chisholm, William, Blessington, Co. Wicklow (IE)
(74) Representative: Hanna, Peter William Derek

(57) **Abstract**

A system for performing currency calculations comprising a computer system and a program using a currency module, wherein the currency module comprises means for returning an exchange rate value in response to transaction details passed to the currency module, the exchange rate stored as a rate variable in the program. The system further comprises means for storing rate variable names and their transaction details in a storage location, when transaction details are passed to the currency table and a value returned to a rate variable, means for retrieving transaction details from the storage location corresponding to a rate variable when the rate variable is required in a currency conversion calculation, means for determining an appropriate currency conversion calculation method, and means for implementing said appropriate currency calculation method. A system for implementing this currency calculation system is also described.

## Description

### Field of the invention

This invention relates to computer systems using currency calculations. More specifically, this invention relates to the provision of EURO compliant computer systems and the conversion of existing computer systems to EURO compliant systems.

### BACKGROUND OF THE INVENTION

Article 3a of the Treaty establishing the European Community provides for the irrevocable fixing of exchange rates and the introduction of a single currency, or European Monetary Union (EMU). Accordingly, the EURO introduced on the 1st January 1999 is established as a currency in its own right. EURO bank notes and coins will be put into circulation in substitution for bank notes and coins in the old national currency units of a number of participating European countries on 1st January 2002. The eleven member states participating in the EURO from the 1st January 1999 are Belgium, Germany, Spain, France, Ireland, Italy Luxembourg, Netherlands, Austria, Portugal and Finland. From 1st January 1999, banking was possible in the EURO. Rates of exchange are fixed between the currencies of the participating states and the EURO and the currencies of these eleven member states will be gradually discarded. During this transition period from the 1st January 1999 to the 1st January 2002 there will be two different currency units available in each member state, i.e. the EURO and the national denomination of that state. Financial information systems will have to be checked and if necessary modified to accommodate the EURO and the national denominations. Any computer systems that process financial information in one of the participating national currencies will be affected by the EURO changeover. The problems involved in converting financial systems to handle the EURO and for complying with the regulations surrounding the EURO are outlined in a number of documents, for example "Preparing Financial Information Systems For The EURO" produced by the Directorate General XV of the European Commission Brussels, 15 December 1997. This document describes the basic legal frame work for the introduction of the EURO, the preparations required and the difficulties that are likely to be encountered during a EURO changeover.

One of the key difficulties concerning the EURO changeover is the rules regarding the use of national currency units (NCU), which are the units of the currencies of the participating member states, during a transition period. Council Regulation number 1103/97, which is based on Article 235 of the EC Treaty, provides the legal framework for certain provisions of the introduction of the EURO. This regulation covers those aspects which are required to facilitate early preparation for the changeover and to ensure market certainty. These aspects include rules relating to contracts, conversion and rounding. The rules relating to conversion and rounding will have particularly dramatic effects in computing systems. In particular the rules provide that:
1. The conversion rate shall be adopted as one EURO expressed in terms of each of the national currencies of participating member states. They shall be adapted with six significant figures counted from the left and starting with the first non zero figure:
2. The conversion rates shall not be rounded or truncated when making conversions:
3. The conversion rates shall be used for conversions either way between the EURO unit and the national currencies units. Inverse rates derived from conversion rates shall not be used:
4. Monetary amounts to be converted from one NCU to another NCU shall first be converted into a monetary amount expressed in the EURO unit, which amount may be rounded to not less than three decimals and then converted from the amount in EUROs to the other NCU. No alternative method of calculation may be used unless it produces the same results.

Accordingly from the 1 January 1999 it will no longer be possible to convert directly from one national currency to another national currency unit, e.g. French francs to Irish pounds. Instead the amount in the first national currency unit will have to be converted to the EURO and subsequently the amount in EURO will have to be converted to the second national currency unit. This dual conversion technique is referred to as "triangulation". Table 1 (below) shows the appropriate conversion method for converting between currencies. The currency code for the EURO will be EUR, although as with existing currencies, companies can choose whatever code they wish for internal purposes. The term "OUT" refers to any currency other than the EURO or NCU's.

**Table 1.**

| **Currency Conversion Rules** | | | |
|---|---|---|---|
| **First Currency** | **Second Currency** | **Rule/Method of Conversion** | **Example** |
| NCU | EUR | Division | IR£ - EUR |
| EUR | NCU | Multiply | EUR-IR£ |
| NCU | NCU | Triangulate (Divide then Multiply) | IR£ - NLG |
| Out | NCU | ½ Triangulate (Multiply then Multiply) | US$ - IR£ |
| NCU | Out | ½ Triangulate (Divide then Multiply) | IR£ - US$ |
| Same | Same | Factor 1 (No conversion required) | IR£ - IR£ |
| Out | Out | Normal | US$ - Stg£ |
| Out | EUR | Normal | US$ - EUR |
| EUR | Out | Normal | EUR - US$ |

Most large software applications provide for the multi-currency environment. This allows, for example, a manufacturer to have a price list in Irish pounds, bill a client in US dollars and accept payment in another currency. Such software applications can be relatively easily modified to include an extra currency, for example the EURO. However, these software applications will have severe difficulty accommodating the conversion rules surrounding the EURO and the national currency units during the transitional period and after it.

Software applications will, in general, require no serious modification to be adapted to handle conversions between the EURO and out currencies, i.e. non NCU currencies, as there is no change between the rules proposed and the way in which systems currently handle conversions. The required modification of software applications is to enable them to perform currency conversion calculations involving an NCU. In this case the method of conversion will depend on what the currencies are, for example if conversion is from one NCU to another NCU then the triangulation method described above must be used. Software applications will have to be modified to take account of the conversion rules. The simple approach of using cross rates between NCU's and other NCU's or out currencies is not allowed. Exchange rates as currently understood will not exist between NCU's and the EURO, as the rate will be fixed and will not vary. These fixed exchange rates between NCU's and the EURO are commonly referred to as conversion factors. The problem of conversion between NCU's and other currencies ceases to exist following the expiration of the transition period, as the NCU's themselves cease to exist after this date. Different transition periods will exist as more countries sign up to the EURO.

At present there are two approaches to solving the EURO problem in software applications:
1. Upgrade or convert to a EURO compliant version of the software
2. Modify the existing software.

The first approach may not be available in all cases, may be prohibitively expensive or may take a considerable time to implement. The second approach has a significant number of associated problems.

Typically, software applications use a table for storing currency exchange rates. The table, referred to as a currency table, will contain a list of currencies and their rates of exchange to other currencies. The table may also contain different exchange rates for different dates. The table may further contain different exchange rates for different types of transaction. Typical examples of these may include spot rates, month end rates and budgeting rates. Another division that can arise is where a large company has several branches in different countries, each of these locations may use the same computer system, however the currency table may be divided on a company basis, each division of the company using a different base currency.

When a program requires a currency exchange rate, it will typically make a call/request to the currency table, passing details of the type of transaction, e.g. from currency type, to currency type, date of transaction, type of exchange rate, company code. In practice the number and type of details which must be passed to the currency table will vary from system to system. In some systems, default values may be used where specific values are omitted, for example, the date of the transaction may default to the system date if no date for a transaction is entered.

Programs typically use rates, obtained in this way from a currency table to convert an amount in one currency to another currency, normally by multiplication.

Unfortunately, as explained above this method will shortly only be allowed for certain transactions. Other transactions must use the methods described above, i.e. triangulation, half triangulation.

When adopting the second approach identified above to solve the EURO problem, the program code must be altered to implement the new conversion rules. Typically, a section of code will have to be inserted to determine which type of conversion is to take place, which conversion rule is to be used and a further section of code will be required to perform the conversion itself.

A considerable difficulty using this approach is that in the program code, the section which obtains the currency rate from the currency table may not be adjacent to the section of code which performs the calculation. In fact they may be displaced by several hundred lines of code. It will be clear that a large amount of time will be required to identify which currency call and which currency transaction relate to which, to ensure the right calculation method is used.

Another effect of code having currency calls and calculations displaced from one and other is that standard software tools for assisting in code location and alteration will be of minimal benefit as the program code may not follow a logical flow. Accordingly, the conversion of software to EURO compliant versions will require significant programming resources.

A further complication in converting existing systems arises because frequently an exchange rate for a particular transaction will be stored with the record of that transaction. In this situation no details will be passed to a currency table to obtain a rate, instead the value stored in a particular field will be taken as the exchange rate. Merely knowing the name of this particular field will be of no assistance when deciding on an appropriate calculation method, as the field itself will only hold the value of the exchange rate and no information regarding the currencies being converted or the dates of the conversion.

Another difficulty implementing EURO conversion rules on a software application occurs because frequently users are permitted to alter exchange rates used on a particular transaction. With the advent of EMU, any modifications involving a rate from an NCU to another currency will be prohibited, instead only the EURO part of the rate may be modified. Thus any system showing user modifiable rates on a screen will have to be altered so as to permit only the EURO - Out or Out-EURO rate to be modified. Users should still be allowed to alter OUT-OUT rates as normal

A further problem is that a currency calculation may use a currency exchange rate which may be produced by a number of alternative sections of code depending on operating and input parameters. Accordingly, a single currency calculation may use a rate which may have been retrieved from a number of possible alternatives. Similarly a rate obtained in one location may be used in one or more of a variety of currency calculations. This complicates the inclusion of code to link sections of the program to ensure the correct method of calculation is used.

A further problem in modifying existing code is that the choice of conversion method will depend on the date, e.g. conversion from one NCU to another NCU before the 1 January 1999 will use conventional currency calculations, whereas after this date triangulation must be used. Further difficulties are created as further countries join up to the single European currency, thus creating different transitional periods.

### BRIEF SUMMARY OF THE INVENTION

This invention provides a system and method of tracking currency rate requests made to a currency tables, data or display files of a computer system. This tracking simplifies the conversion of software applications to ensure EURO compliance.

The invention further provides for a system and method of converting existing computer systems to EURO compliant computer systems.

### STATEMENTS OF INVENTION

A method for performing currency calculations in a software application on a computer system comprising the steps of retrieving an exchange rate from a exchange rate storage means, storing the retrieved rate in a rate variable, storing transaction details for the rate variable in a dynamic table, retrieving the transaction details for the rate variable from the dynamic table when the rate is required for a calculation, determining an appropriate calculation method using the transaction details, and performing said appropriate calculation method.

The exchange rate storage means may be a currency rates module, an exchange rate table or as a field in a data or display file. The method of retrieving the rate may he by function, subroutine or program call.

Each rate variable may have a corresponding dynamic table. Preferably, one dynamic table is used for all rate variables in a program.

The transaction details may include one or more of the following, the 'FROM' currency, the 'TO' currency, the rate variable name, the date of the transaction, the type of exchange rate, the company code, the exchange rate itself, the date format, the 'FROM' currency used to access the exchange rate storage means, the 'TO' currency used to access the exchange rate storage means.

The step of determining an appropriate calculation method may include a reference to a rules module. The rules module containing a set of rules for deciding an appropriate calculation method. The rules module may be hard coded in software. Preferably the rules module comprises a modifiable table indicating whether a currency has joined a currency system (e.g. EMU). and the dates of the transition period if any. The table may also contain details of the transition period for each currency which has joined the currency system. The performing of said appropriate calculation method may be by a function external to the program or by code or subroutine within the program.

In a further variant a system is provided for performing currency calculations comprising a computer system having means for retrieving an exchange rate from an exchange rate storage means, means for storing the retrieved rate in a rate variable, a dynamic table, means for storing transaction details for the rate variable in the dynamic table, means for retrieving the transaction details for the rate variable from the dynamic table when the rate is required for a calculation, means for determining an appropriate calculation method using the transaction details, and means for performing said appropriate calculation method.

The exchange rate storage means may be a currency rates module, an exchange rate table or as a field in a data or display file. The means for retrieving the rate may be by way of a function, subroutine or program call.

Each rate variable may have a corresponding dynamic table. Preferably, one dynamic table is used for all rate variables in a program.

The transaction details may include one or more of the following, the 'FROM' currency, the 'TO' currency, the rate variable name, the date of the transaction, the type of exchange rate, the company code, the exchange rate itself, the date format, the 'FROM' currency used to access the exchange rate storage means, the 'TO' currency used to access the exchange rate storage means.

The means for determining an appropriate calculation method may include a rules module, containing a set of rules for deciding an appropriate calculation method. The rules module may be hard coded in software. Preferably, the rules module comprises a modifiable table indicating whether a currency has joined a currency system (e.g. EMU). and the dates of the transition period if any. The table may also contain details of the transition period for each currency which has joined the currency system. The means for performing the appropriate calculation may be a function, program code or a subroutine.

In another aspect of the invention a method is provided for converting a non EURO compliant program into a EURO compliant program comprising the steps of identifying rate variables in the program code which store currency rate values, locating first positions in the program code where currency exchange rate values are passed to a rate variable, each of said first positions having a corresponding rate variable, inserting storage code at each of said first positions, said storage code which if run stores the variable names of the corresponding rate variable and the rate variables corresponding transaction details in a storage location, locating second positions in the program code where calculations using a rate variable occur, each of said second positions having a corresponding rate variable, inserting retrieval code at each of said second positions, which if run retrieves the transaction details from said storage location for the rate variable corresponding to that position, inserting determination code at each of second positions, said determination code if run determining an appropriate currency conversion calculation method, and inserting implementing code at each of said second locations to enable said appropriate currency calculation method.

The step of identifying rate variables in the program code which store currency rate values may include an initial step of searching data and display files to locate fields within these files that contain rate fields. This initial step of searching data and display files may include the creation of an analysis file, identifying the fields which are rate fields and which are not.

The locating of the first positions in the program code may add to or create a separate analysis file for identifying fields which are rate fields and which are not. Preferably the identification of rate fields is performed before locating the first positions in the program, with results stored in the analysis file. The analysis files may be altered manually to correct for any errors. Preferably, The locating of the first positions in the program uses the analysis file to determine locations where a rate is obtained and stored as a variable.

The step of inserting storage code at each of said first positions may include the insertion of a function or call to a sub routine to (if called) store the variable name of the corresponding rate variable and its corresponding transaction details in a storage location.

In one embodiment the fields, variables, or parameters identifying the corresponding transaction details are obtained from parameters passed to an exchange rate table or from fields associated with the field in a data/display from which the rate was obtained. Preferably the associated fields are identified in an associations list or file.

In a preferred embodiment, the method comprises the additional step of inserting code at or close to the start of the program code to create a dynamic table for storing details of rate variables.

In a variant of the invention, a rules module is created, to which reference is made by the determination code to determine an appropriate calculation method.

In a further variant of the invention, comment statements are inserted indicating that a change has occurred to the program code at that location. These comment statements may include details of the nature of the change, the date of the change and the user or program responsible for the change.

In another version of the invention a system, is provided for converting a non EURO compliant program consisting of program code into a EURO compliant program, comprising a computer having means for identifying rate variables in the program code which store currency rate values, means for locating first positions in the program code where currency exchange rate values are passed to a rate variable, each of said first positions having a corresponding rate variable, means for inserting storage code at each of said first positions, said storage code which if run stores the variable names of the corresponding rate variable and the rate variables corresponding transaction details in a storage location, means for locating second positions in the program code where calculations using a rate variable occur, each of said second positions having a corresponding rate variable, means for inserting retrieval code at each of said second positions, which if run retrieves the transaction details from said storage location for the rate variable corresponding to that position, means for inserting determination code at each of second positions, said determination code if run determining an appropriate currency conversion calculation method, and means for inserting implementing code at each of said second locations to enable said appropriate currency calculation method.

The means for identifying rate variables in the program code may include searching means for initially searching data and display files to locate fields within these files that contain rate fields. This searching means may include the creation of an analysis file, identifying the fields which are rate fields and which are not.

The means for locating first positions in the program code may add to or create a separate analysis file for identifying fields which are rate fields and which are not. Preferably the system is arranged so that identification of rate fields is performed before locating the first positions in the program, with results stored in the analysis file. In a preferred embodiment, the system allows for manual alteration of the analysis files to correct for any errors. Preferably, The means for locating first positions in the program uses the analysis file to determine locations where a rate is obtained and stored as a variable.

The means for inserting storage code at each of said first positions may include the insertion of a function or call to a sub routine to (if called) store the variable name of the corresponding rate variable and its corresponding transaction details in a storage location.

In one embodiment means are inserted in the program code enabling the fields, variables, or parameters identifying the corresponding transaction details to be obtained from parameters passed to an exchange rate table or from fields associated with a field in a data/display from which the rate was obtained. Preferably the associated fields are identified in an associations table or file.

In a preferred embodiment, the system comprises additional means for inserting code at or close to the start of the program code to create a dynamic table for storing details of rate variables.

In a variant of the invention, means are provided for creation of a rules, to which reference may be made by the determination code to determine an appropriate calculation method.

In a further variant of the invention, means are provided for inserting comment statements indicating that a change has occurred to the program code at that location. These comment statements may include details of the nature of the change, the date of the change and the user or program responsible for the change.

The invention also extends to a computer program product comprising a computer usable medium having computer readable program code embodied therein, the computer readable program code directly loadable into the internal memory of a digital computer for performing the steps of the methods described above.

The invention further extends to a computer data signal, embodied in a carrier wave, having computer readable program code embodied therein, the computer readable program code loadable into the internal memory of a digital computer for performing the steps of the methods described above.

### BRIEF DESCRIPTION OF THE DRAWINGS

For a better understanding of the present invention, reference is made to the accompanying drawings, which are incorporated herein by reference and in which:
Figure 1 is a pictorial view of a computing system,
Figure 2 illustrates a prior art method of performing currency calculations in a computer system as shown in Figure 1,
Figure 3 is a block diagram of a method of performing currency calculations according to the invention,
Figure 3a is a method of implementing a section of the invention illustrated in figure 3, on a computer system using exchange rate files,
Figure 3b is a method of implementing a section of Figure 3 on a system obtaining exchange rates from data or display files.
Figure 4 is a more detailed diagram of a portion of Figure 3,
Figure 5 is an illustration of programs implemented according to the invention in a computer system as shown in Figure 1,
Figure 6 shows a dynamic tables contents according to the invention,
Figure 7 is a method of implementing the steps shown in Figure 3 in a computer system,
Figure 8 is a particular embodiment of Figure 7.

### Detailed Description of the Drawings

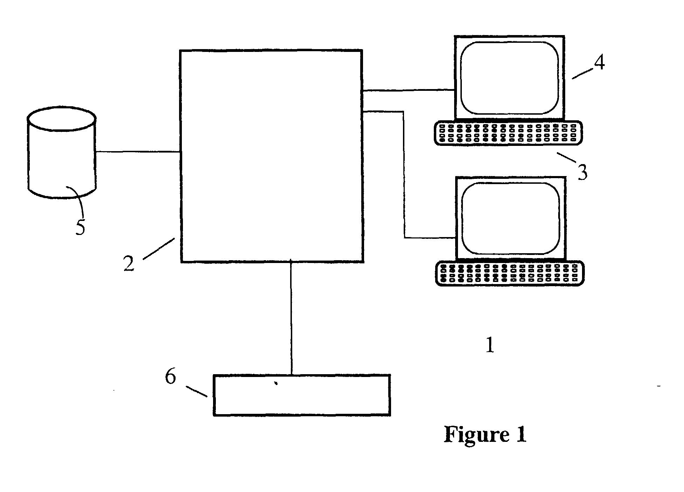

Referring to Figure 1, a computer system, 1, e.g. an IBM AS/400, is shown having a CPU unit, 2, at least one terminal comprising a keyboard, 3, and screen, 4, at least one mass storage device, 5, e.g. a magnetic hard disk and optionally one or more output devices, 6, e.g. printers.

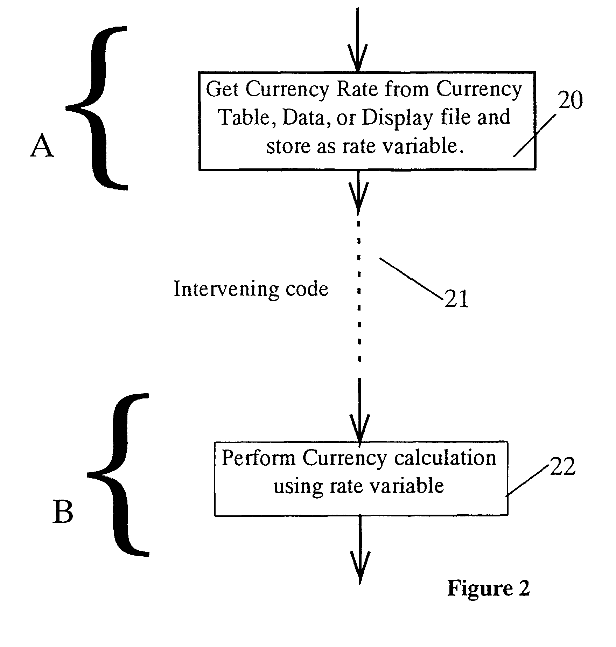

Existing currency conversion methods operating in software applications, as shown in Figure 1, typically perform a conversion in two steps. These steps, shown in Figure 2, are A) obtaining an exchange rate value, 20, and B) performing the calculation, 22. These steps may not be implemented consecutively in program code and as a result there will frequently be intervening sections of code, 22, between the two steps, 20, 22. A single exchange rate value may be used several times in different calculations, accordingly there may be several different and distinct step B's for each step A. Step A may consist of passing parameters, corresponding to transaction details, to the rate table to identify a particular rate required. The transaction details required will vary from system to system. Typical transaction detail parameters may include the 'IN' currency (the starting currency), the 'OUT' currency (the final currency), the date of the transaction and the type of transaction (i.e. what type of rate to use). Frequently, default values are used by the rate table when parameters are omitted, for example if the 'IN' currency was omitted, the table may select the base currency as the default. Other parameters that may be identified in the call may include the company number, etc. The amount to be converted is not normally specified. All of the parameters may not be required, for example in the case above, if the OUT currency is omitted the table may select the base currency for the company the transaction applies to as the default Out Currency.

Exchange rates may also be obtained from data or display systems. For example, from a field on a file for storing invoice details may contain the exchange rate to he used for that particular invoice. This exchange rate may be used when processing a payment received by a customer rather than a rate obtained directly from the exchange rate table. The systems may also provide for a user to enter/override a value for an exchange rate on a screen (display file),

Accordingly, step A may also refer to data and/or display files depending on the system. However, it will be appreciated that in this case, no parameters are passed to the data or display file, rather the value stored in a particular field is retrieved.

The exchange rate obtained, 20 in step A is stored as a variable, hereinafter referred to as a rate variable, in the program. There may be several rate variables in a program, each storing a distinct exchange rate value. Subsequent calls, 20, using a particular rate variable, to the currency table (or values retrieved from data/display files) will alter the value of the particular rate variable.

The actual step of performing a exchange calculation, 22, step B, is typically implemented by multiplying the currency value to be converted by a rate variable.

As described above, from the 1 January 1999, this particular method of performing currency calculations will no longer be permitted for certain European currencies, i.e. the NCU's. Instead the rules described above and shown in table 1 must he used.

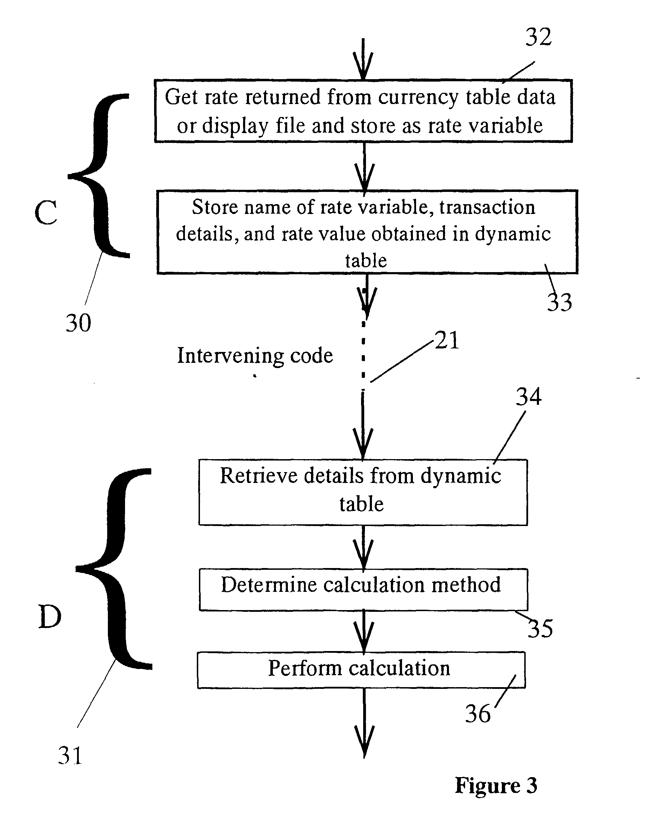

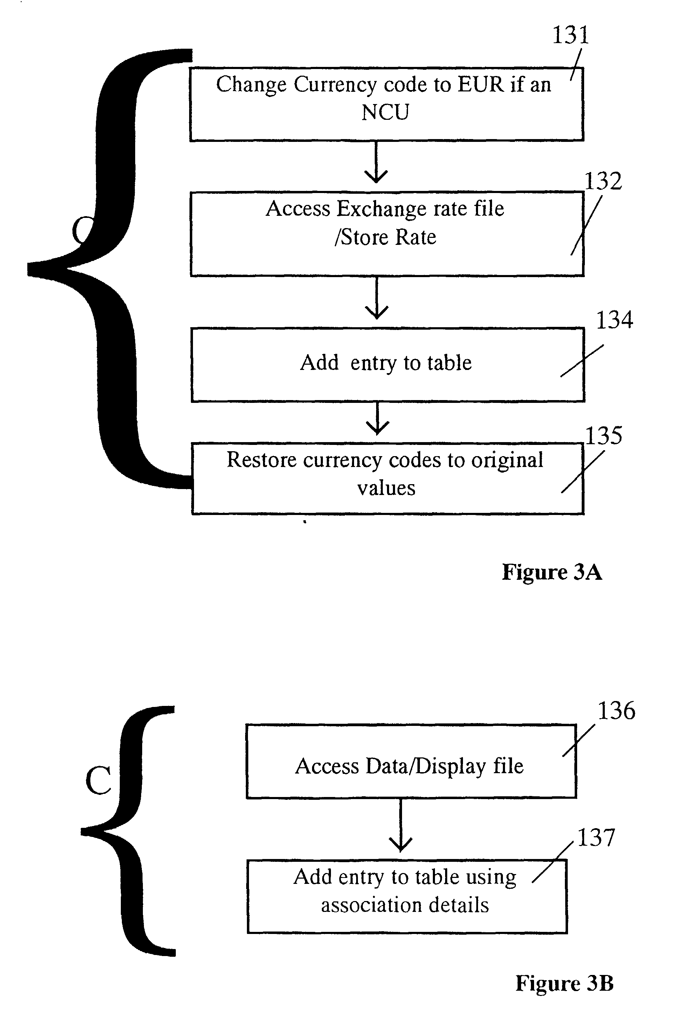

Existing software applications, as described above, are difficult to make EURO compliant as the currency calculations are performed in a separate step from obtaining the exchange rates thus ensuring that correction of code manually is a labour intensive job and correction by a program extremely difficult. A solution to this problem, according to the invention, is shown in Figure 3, in which steps A, 20, and B, 22, of Figure 2, have been replaced by steps C, 30, and D, 31, respectively. This solution provides an effective link between the two previously separated sections, thus overcoming the difficulties described above.

Step C, performs the same step as Step A of Figure 2, i.e. passing parameters, corresponding to transaction details, to the exchange rate table to identify a particular rate required and storing the obtained rate value in a rate variable, 32 or obtaining a value from a data or display file. In addition, step C stores, 33, the name of the rate variable in which the rate value is stored and the parameters, corresponding to transaction details, in a program storage means, for example an array or table. A suitable choice of storage means is a dynamic table which may be stored in temporary memory, e.g. RAM or in more permanent memory, e.g. magnetic media. The term dynamic indicates that the values may be altered and are not fixed. The term also is used to denote that the table is not necessarily a permanent feature but may be created and deleted as required. As different rate values are stored 32, the table is updated 33 to reflect the changes corresponding to any particular rate variable. As the methods for retrieving an exchange rate from rate table and data/display files differ. The implementation of the Step C will vary accordingly. A version of Step C particular to obtaining a value from a rate table is illustrated in Figure 3A and a version of Step C adapted for handling rates obtained from data/display files is shown in Figure 3B. Both of these versions, which are described in detail later, may be implemented concurrently on a system. A problem in storing transaction details in a dynamic table is that the fields containing the transaction details must be identified. When making calls to a rate table, these fields may be readily identifiable and consistent throughout a system so that they need only he identified once, however when values are obtained from a data/display file the fields will vary from file to file. In some cases the fields required may not even be available in the same file but are available by cross referencing to another related file. To overcome this problem, the present invention introduces associations, whereby the fields containing details of a exchange rate are associated with the fields used to originally get that rate. Associations and the method implementing them are described in greater detail later.

A method of implementing step C of the invention at locations in software systems where exchange rates are obtained from a currency table is shown in Figure 3A. One difficulty with currency tables is that after the start of the transition period for an NCU, it ceases to have an exchange rate with other currencies, hence any call to the rate table for this currency will result in an error. To overcome this, the first step of the method, shown in Figure 3A, changes the currency code of any NCU's being passed to the rate table to EUR to ensure that a valid exchange rate may be obtained, i.e. if either the 'FROM' or 'TO' currency is an NCU, then they are replaced with EUR. A test should he included to ensure that at the date of the transaction, the NCU is in the transaction phase. If the date of the transaction is not within the transition period for the particular NCU the currency code should not be changed to EUR. An exchange rate is then obtained from the file. The exchange rate obtained and the parameters passed are then stored in the dynamic table. A further test may be included to confirm that a valid rate was obtained corresponding to EUR and the other currency code exchange rate. The last step restores the values of the original currency codes. This restoration is necessary as frequently, programs using rate tables will include a check to confirm that the currency rate obtained is for the same parameters as was passed. It may also be necessary because the currency code is often stored on data file or displayed on screens. If the restoration was not performed this check would produce an error each time an NCU was used or the wrong code would be inserted into a data file or displayed on screen.

In retrieving a rate which is stored in a data file or entered in a display file, the difficulty in dealing with currencies is reduced because a rate is already available and does not require the passing of parameters to determine an appropriate rate. However, as no parameters are required to obtain the rate, no parameters are immediately available for storage in the dynamic table for subsequent use by Step D. To overcome this difficulty, the method of Figure 3B is used. This method retrieves, 134, the rate from the data or display file. The method then adds, 135, an entry to the dynamic table, if none exists, or updates an entry otherwise. The details for the entry are obtained indirectly by retrieving values from fields associated with the field from which the rate was obtained. In order to implement this approach, each data/display file having fields which store currency exchange rates must be examined to determine the relationships of these currency exchange rate fields with other fields within the files. Occasionally, a required parameter for a currency exchange rate field will not be available from the same file as the currency exchange rate field. In this case a link may be required to other files. The associations may include a definition of the relationship basis. For example, it may not he sufficient to merely state that Field 1 and Field 2 are related to an exchange rate field, Field 3. Instead, the functions of the fields must be identified, e.g. Field 1 is the 'From' currency and Field 2 the date of the transaction. The concept of associations, as these relationships are called is explained later in greater detail. Frequently, default values will be used/assumed where no field is available.

Step D, 31, retrieves the parameters stored against the name of a required rate variable from the program storage means, dynamic table. In addition, it determines the appropriate conversion calculation method, 35, from the retrieved parameters and then implements the appropriate conversion calculation method, 36.

The determination of the appropriate calculation method from the retrieved parameters, is made by reference to a set of rules. The rules may be hard coded or refer to a data source, e.g. a table, which includes information on currencies to determine an appropriate calculation method. This information may indicate whether a particular currency is a NCU or not. If a particular currency is identified as an NCU, then the data source may define the transition period for that currency, and other information which may he helpful in determining an appropriate conversion method.

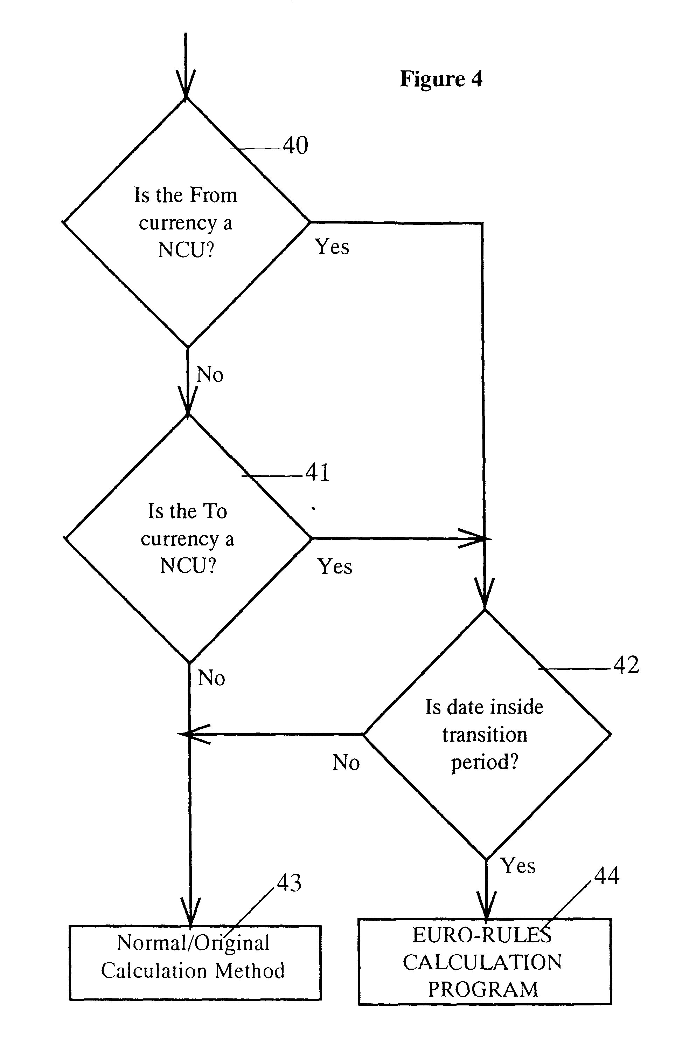

A simplified embodiment of the method of determining an appropriate calculation method is depicted in Figure 4. The first step in the embodiment is to check whether the "FROM" currency is a NCU or not, 40. If the from currency is not a NCU, then the next step in the method is to determine whether the "To" currency is an NCU or not, 41. If either the "From" or the "To" currency is a NCU, then the next step in the method is to determine whether the date of the transactions was prior to the currency becoming an NCU, 42. If it was prior to this date or if neither the "From" or "To" currency is a NCU then no special calculation method is required and the program may process the transaction in the normal manner, using the normal program code, 43. If however either the "From" or "To" currency was an NCU and the date of the transaction was after the date the currency became an NCU, then normal calculations are not be permitted and accordingly an alternative EURO compliant method is used, 44. This step of performing the calculation may require obtaining a further rate from the currency table. For example, if the details stored in the dynamic table indicate conversion from a first NCU to a second NCU (determined by reference to currency exchange rate rules module), then the program will retrieve a rate from the first NCU to the EURO from the currency table, divide the amount to be converted by this rate to obtain an intermediate amount, in EUROs retrieve a second rate from the EURO to the second NCU from the currency table, multiply this second rate by the intermediate EURO amount to obtain the final currency amount and pass this final currency amount to the specified variable in the main program. As conversion factors (fixed exchange rates) are used for conversion of NCU's to EUROs these factors may be included elsewhere than the currency table, e.g. in the program code itself or in data source described above in combination with the set of rules for determining an appropriate conversion method.

Accordingly, it is preferable that the transition periods for NCU's be available in a table rather than hard coded to enable changes/up dates to be performed efficiently. While currently there is only one transition period for currencies joining the EMU. Different transition periods may arise as different currencies join.

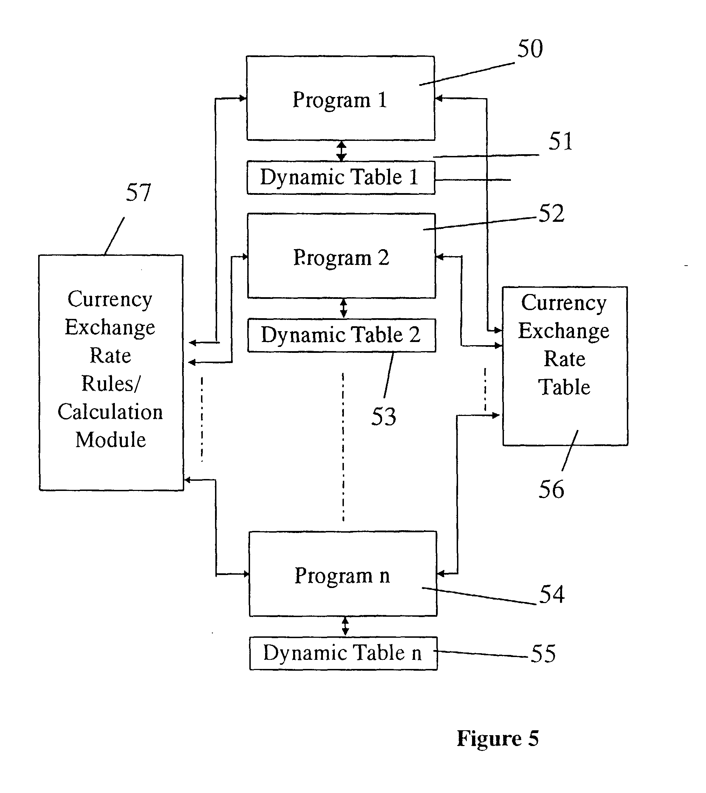

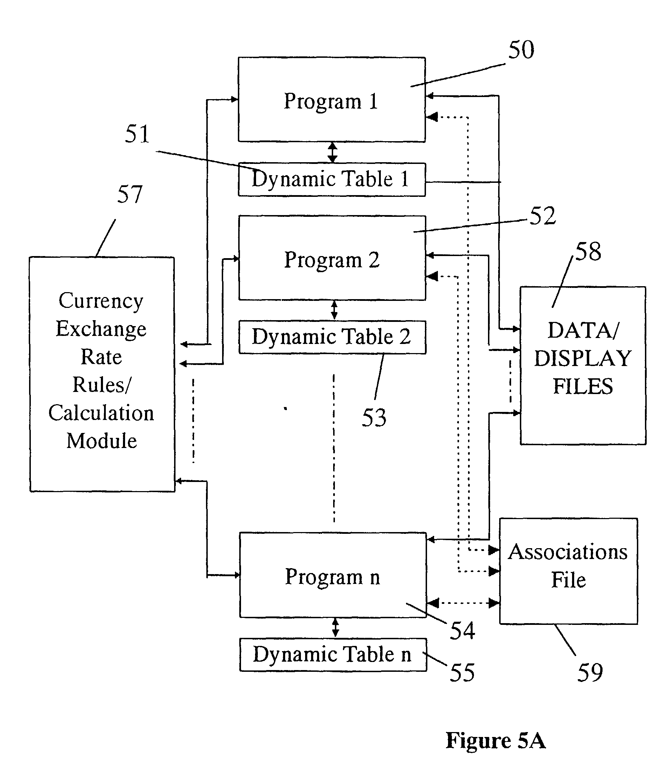

Programs performing currency calculations according to the method of the invention implemented on a computer system are illustrated in block diagram form in Figure 5, in which a number (n) of programs, 50, 52, 54, make requests to a currency exchange rate table, which returns an appropriate exchange rate corresponding to the parameters passed in a request. An embodiment illustrating programs obtaining exchange rates directly from data or display files is shown in Figure 5A. In general, not all programs will run simultaneously. Frequently, several different versions of the same program will run concurrently, for example where different users are working on different terminals simultaneously. Accordingly, the first, 50, and second programs, 52, may be the same program run by different users.

Each program has a corresponding storage means, 51, 53, 55, (dynamic table) which stores details of requests made to the currency exchange rate table, 56 and the rate variable to which the returned exchange rate value is passed. These details may subsequently be retrieved and used to determine how a particular exchange rate was obtained. This determination may be used by a program to decide the correct method of calculation to be used in a transaction using a particular variable. In deciding the appropriate calculation method, the program may refer to a currency exchange rate rules module 57, which will contain details of particular currencies, including information regarding a currencies membership of the EMU and transition periods where applicable. The currency exchange rate rules module 57 may determine the appropriate conversion method and perform this calculation or this may be performed in the individual programs or as functions called from these programs.

Ideally, the storage means, dynamic tables, 51, 53, 55 of a program 50, 52, 54 is empty when the program is started. If the storage medium is not empty when the program starts, then errors may occur. An example of a possible error if a dynamic table is not empty when a program is initialised, is where a rate value is not obtained for a particular rate variable but the rate variable is used in a calculation. In a normal program this may produce an error message. However, in a method according to the invention, where the table is not initialised, the table may contain parameter data corresponding to a rate value obtained for a particular rate variable in a previous execution of the program. The rules module may use this parameter data to implement the currency transaction, without producing an error message. Accordingly a user could be misled about the reliability of the program and/or data.

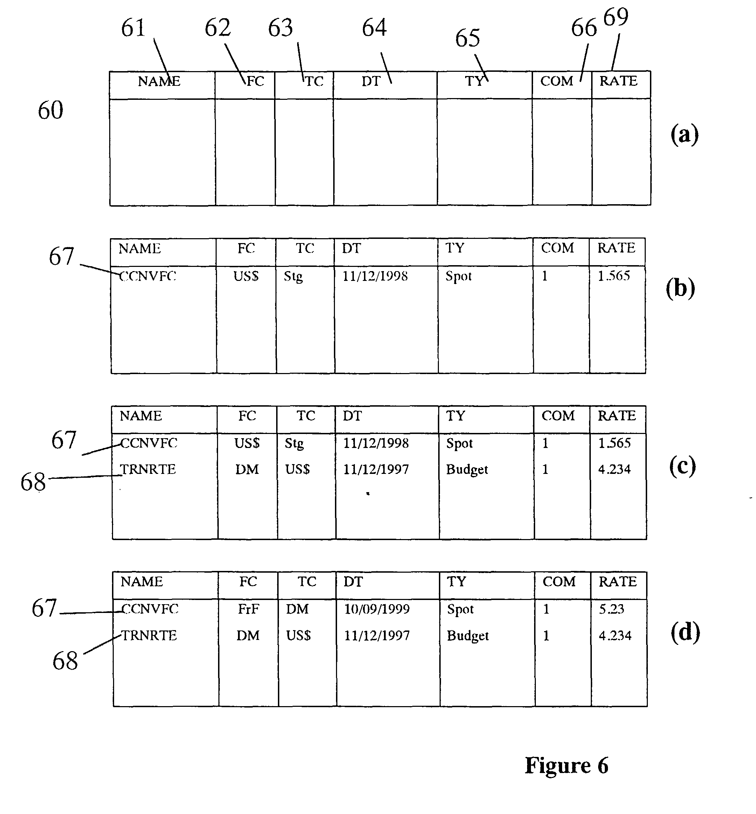

The Dynamic table 60 may be created when required. Preferably, the Dynamic table is created when the program is initialising. Referring to Figure 6(a), an empty Dynamic table is shown having fields NAME (61), FC (62), TC (63), DT (64), TY (65), COM (66) and RATE (69) corresponding to the Name of the variable, the "From" ('IN') currency, the "To" ('OUT') currency, the date, the type of transaction, the company code and the exchange rate retrieved. These fields corresponding to the fields used by the call to the currency rate table to get an exchange rate. The fields will vary from system to system and the method used to obtain the rate. Depending on the complexity of the system more or less fields may be required. For example, the present illustration above has a field for company code, if the system in question is only used by a single company then this field will probably not be required. The inclusion of other fields may be beneficial. Such additional fields may include, the date format, the from currency used to access the exchange rate file, the to currency used to access the exchange rate file. These additional fields can be used to help overcome problems with individual systems, for example where the date format used is not consistent throughout the files or for error checking to ensure that values returned correspond to fields requested.

The operation of the dynamic table will now be explained by way of example. Initially the table is empty of all values, Figure 6(a). Subsequently, a call is made to the currency table, requesting the 'Spot' rate for United States dollars (US$) to British pounds Sterling (Stg.) on 11/12/1998 for Company number 1. The returned value stored in a rate variable 'CCNVFC'. Accordingly, the variable 'CCNVFC' will have a rate value stored in it corresponding to this rate. In conventional programs no other information is associated with the variable 'CCNVFC'. In a program running a method according to the invention, details, 67, of how the rate value was obtained are stored in the dynamic table 60 (Figure 6(b)). Similarly, if a request is made to the currency table requesting the 'Budget' rate for DM to US$ on 11/12/1997 for Company number 1 and giving the variable 'TRNRTE' for storing this rate, the variable 'TRNRTE' will contain the returned rate value and the dynamic table will contain details 68 of how the rate value was obtained. If a currency rate is used in a calculation, then the dynamic table may be interrogated to find the currency and transaction details which may be used to determine an appropriate method of calculation. This determination may consider whether the calculation may proceed as normal or whether an alternative calculation must he used to comply with the EURO rules. Alternatively, the values may be passed to a calculation program to determine an answer. As subsequent requests are made to the currency table, passing rate values to rate variables for which an entry already exists in the dynamic table, then the values in the dynamic table are updated using details of these later requests. This updating is illustrated in Figure 6 (d) where the values of CCNVFC 67 (as shown in Figures 6(b) and 6(c) have been replaced by values 67a corresponding to a subsequent call to the currency table for a rate for converting from FrF. to DM using a Spot rate for the 10/09/1998 where the company code is 1. This rate value is now stored in the rate variable CCNVFC and the details of how the rate value was obtained are stored 67a in the dynamic table 60.

Programs performing currency calculations according to the method of the invention implemented on a computer system are illustrated in block diagram form in Figure 5A, in which a number (n) of programs obtain exchange rates from Data or Display files rather than by requests to a currency exchange rate table. These programs may also request rates from an exchange rate table as illustrated in Figure 5, but for clarity in the diagram are shown as only obtaining rates from data /display files.

The operation of the programs shown in Figure 5A is similar to that of Figure 5, in that each program has a corresponding storage means, (dynamic table) which stores details of rates obtained and the values of fields associated with that rate which may be used subsequently to implement an appropriate currency conversion technique. The key difference between the two is that in the case of Figure 5, the associated field values were obtainable directly from the parameters passed to the currency exchange rate table, i.e. the fields passed to the exchange rate table. In the present embodiment, the associated field values are obtained using an associations file. The associations file contains a list of fields within data and display files which are used to store exchange rates. For each field, there are a number of associated fields identified which contain information which identifies the transaction parameters corresponding to a particular rate field. Before a system according to the invention may be implemented these associations will have to be set up. In some cases, the data /display file containing the exchange rate will not contain some or all of the fields corresponding to the transaction parameters required for the dynamic table. In this instance, links may be made to other files to obtain this information. An example of where this might occur is in a BPCS system, implemented on AS400 machines, where purchase orders are stored in two separate files, with one file HPH containing the header information and HPO each line of the order. The HPO file contains most of the fields and includes a field for exchange rate values, however the company code for the purchase order is stored in a HPH file. This may be obtained and stored in the dynamic table as required if a link is established in the associations file.

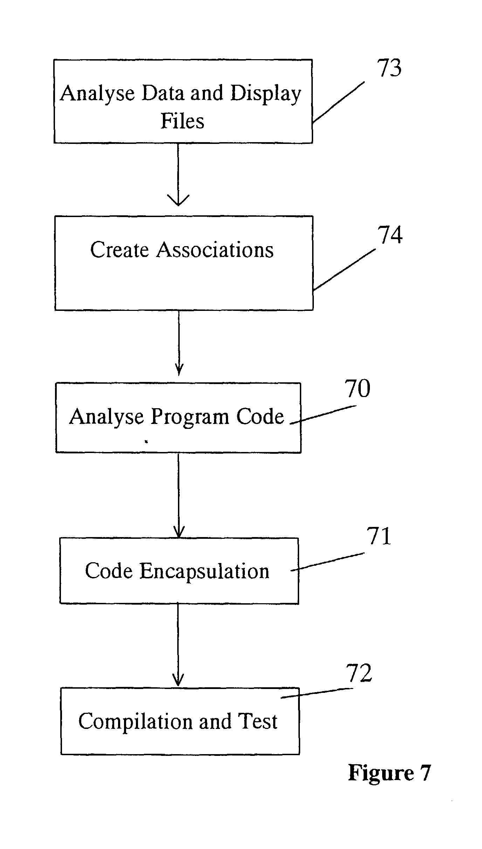

A further aspect of the invention, is a method of modification of existing source code to include the above described method. Referring to Figure 7, it is seen that this aspect of the invention may be implemented in five distinct phases, parts or sections; these are
1. Analyse File, 73,
2. Create Associations, 74,
3. Analysis of Files and Program Code, 70,
4. Code Encapsulation, 71 and
5. Compilation and Test 72.

The first section, 73, analyses all data and display files to find any fields that may possibly contain exchange rates. Preferably, this is a substantially automated task which creates an analysis file which may be reviewed subsequently by a programmer. The analysis file should contain a list of all fields and corresponding details including an attribute code. The corresponding attribute code indicating whether a field is a currency variable or not. A programmer may alter these attributes if the automated section has incorrectly assigned an attribute code.

The following section, 74, enables a user to create associations for all fields identified by the previous section. An association must be made for each parameter required by the dynamic table for each individual field identified by an attribute as a currency field. Preferably, the user is presented with a list of appropriate fields to choose from. For example, if an association is required to a date field then the system should present the user with a list of available date fields to select from. If no field is available within a file corresponding to a required parameter for a rate field then the system should allow the creation of a link to another file where the required parameter is available. In addition, system defaults may be used as associations, e.g. if no "to" currency is available the base currency of the system or company may be used.

The function of the next section "Analysis " 70 is to determine which fields (variables) in the source code are exchange rate variables, where a rate is obtained directly from a rate table.

The source code is analysed to determine if a currency table and/or display or data files that contain exchange rates are used. Movements of the exchange rate fields on these files to other fields may then be tracked. For example, an exchange rate field on the currency table is typically called CCNVFC, the contents of this field may be moved to many other work variables in a program, by tracking the names of these variables, the appropriate code can be added to the program at the appropriate locations. This function is preferably fully automated and no user modifications are allowed or required. The work variables that are discovered during this process do not need associations as they are populated by moving the contents of a known exchange rate field e.g. in a currency table, data or display file to the work variable. This can only happen if the known exchange rate variable has data. Accordingly, when a program is running there will be an entry in the dynamic table which will be copied for the work variable when the work variable is populated.

The next process, 'Code Encapsulation' 71, modifies the sections of code of the program relating to where a rate value is obtained from a currency table and stored in a rate variable (as identified by the analysis file) or where a rate value is obtained from a data or display file or where the contents of a rate variable is moved to another. These modifications include code for storing parameters passed to a currency table and the variable name to which the resulting rate value is passed and code for retrieving using associations parameters corresponding to rate values obtained from data or display files and code for retrieving these parameters when a rate variable is used in a calculation, determining an appropriate method of implementing that calculation and performing that implementation. The Code encapsulation section should also create a section of code in each program modified to create a dynamic table when the programs are initialised.

The final stage, 72, involves the compilation of the source code and testing of the compiled program. To implement the EURO compliant method on a computer system the source code must be compiled into executable code. Once this has been completed test data may be used to determine whether the new EURO compliant code is functioning correctly. Once this has been satisfactorily completed, the old program code may be replaced by the new EURO compliant code.

After the three steps have been completed, the computer systems currency calculations will be EURO compliant.

Although the invention may be carried out in discrete steps by one or more computer programmers, it will be apparent to anybody skilled in the art that the most appropriate method for implementing this solution to the 'EURO' problem is by one or more computer software programs, particularly when the size and complexity of the programs that require to be changed-much is considered. It also advantageous to have the consistency which an automated changing process provides.

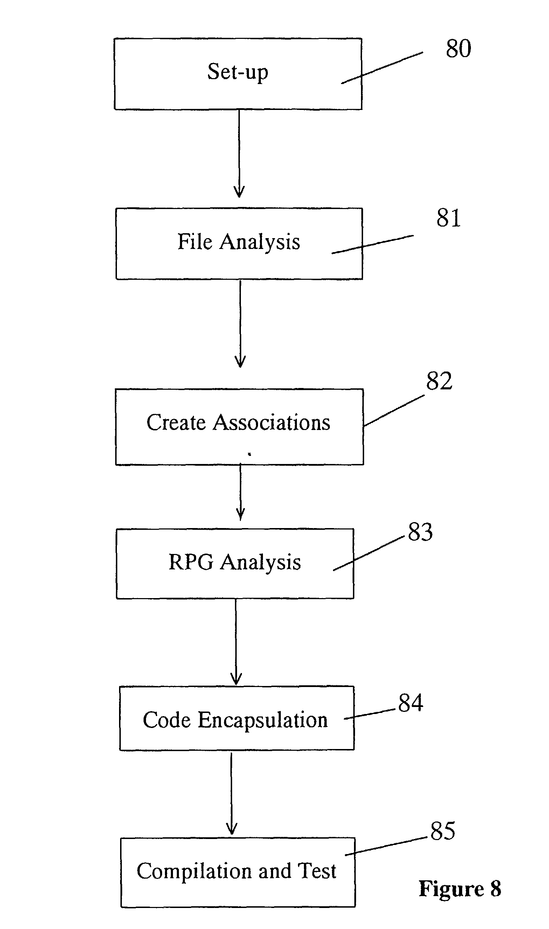

The invention may be better understood by reference to an embodiment, illustrated in Figure 8, of the invention, implemented as a software program for running on a particular system. The following description relates to computer software written in RPG and CL on an IBM AS/400 machine. This embodiment has an extra section to that shown in Figure 7, i.e. the set-up stage 70. The set-up stage 80 installs the software for performing the subsequent steps onto the computer system. In addition, it allows for the entering of conversion factors of NCU's to EUROs and the specifying of defaults for currency codes. An optional feature will allow users to identify certain files and programs to be ignored when performing the subsequent analysis section. By ignoring files and programs which do not contain or relate to currency transaction, the speed of the conversion process can be improved. Specific field masks, field names and items of text can be identified to be included as criterion for determining currency rate fields in files or for determining which fields are not currency rate fields.

The next section, "File Analysis", which is implemented in software, examines files within the AS/400 database system and determines which fields within the data or display files are used for storing rate values. Optionally, the file analysis software may be set to ignore certain programs or files, which are known not to use currency calculations. This step reduces the time required to run the analysis and subsequent stages of encapsulation, recompilation and test.

On AS/400 database systems, the fields containing data are located in files referred to as 'physical' files and the fields relating to the display or printing on screens or reports are located in files referred to as 'device' files. Data stored in these two types of files are referred to as physical and device data. A third type of file, referred to as 'field reference files', do not contain data, but are used for reference purposes by physical or device files. Within an AS/400 system database all field specifications are usually referenced back to a main Field Reference File. This is a file, which contains no data, just attributes, for example field length, field type, edit codes and edit words. Another name for a Field Reference files is a data dictionary. In the present case, we are primarily concerned with physical and device files, however the field reference files are used to help identify which fields are rate variables. The file analysis process begins by identifying currency rate fields in the Field Reference file and then in the device files. It is best completed in this order as fields within Device files may be referenced back to Field Reference Files for their attributes.

Specific field masks, field names and items of text can be identified to be included as criterion for determining currency rate fields in files or for determining which fields are not currency rate fields. A typical field mask for an exchange rate field is 15,7, where 15 is the number of digits and 7 the number of decimal places.

During analysis, a series of checks are used to determine whether a numeric field is in fact an exchange rate field. These checks look at the length of the field, the number of decimal places and the names of the fields to ascertain whether the field is likely to be a currency rate value field.

In addition, field descriptions are analysed to see if they contain a word that might indicate an exchange rate field, e.g. exchange and base. A further set of words may be used to eliminate the possibility of a field being an exchange rate field, e.g. VAT.

In the current example each field is allocated an appropriate status code which is stored in a file, called an analysis file. These status codes are in the form of a number or character e.g. in the present example a '2' indicates a field which is definitely an exchange rate field, a '9' indicates a field which is definitely not an exchange rate field and a '3' indicates a field where it is uncertain whether the field is an exchange rate field or not.

A user may then view this file, changing any incorrect status details, and allocating any status '3' fields as either exchange rate fields or not i.e. modify the status of '3' to a '2' or a '9'.

Depending on the quality standards used when the original files were created the number of fields allocated a status '3' would typically be very low.

From the file analysis phase, the method proceeds to perform an analysis on the RPG programs identifying where any fields which are used for storing rates are assigned values from the currency table, or obtain a rate directly from a data or display file or where they are used in a currency calculation.

The next stage, 'Code Encapsulation', involves using the analysis previously performed to alter the RPG code of the program in question to:
1. store the details of parameters passed to the currency exchange table and the variable to which it is passed,
2. retrieve parameters from data or display files using associations when a rate is obtained from a data or display file to insert code at each location where a currency transaction occurs to select the,
3. correct method of calculation of a currency transaction, and to perform said correct method of calculation.

The final stage involves compiling the amended source code into executable form, testing it to ensure it works and then replacing the previous executable programs where required.

The insertion of the pieces of code as previously described into the RPG programs ensures that existing computer accounting systems may be modified to become EURO compliant.

Query definitions are particularly difficult to convert. The primary reason for this is that a query definition can not be reviewed in an automatic manner, unlike the way that programs can be as described above. Each query must be viewed individually by a programmer to determine whether a currency value is used and in addition to determine whether the query is used on a frequent or infrequent basis. If a query was created a long time ago and has not been used since its initial creation it is unlikely that it will he used again and accordingly may be simply be deleted or ignored. However to determine this requires a programmer to open the query and analyse it. The present invention overcomes this difficulty by using a program available for IBM AS400 systems to convert query definitions to SQL. Following this conversion, the SQL language may be analysed to determine whether any of the fields used in the SQL have previously been identified in the analysis file as currency rate fields. The SQL language may further be analysed to determine when the query was created and when it was last used. This information may be used to create a report identifying which queries us or print exchange rates. The report may further give an indication of which queries should be prioritised for change based on their creation and usage details. A programmer having this report will have a reduced number of queries to analyse and modify. For example using the above method on a system having several thousand queries a programmer may determine that only a hundred or so queries require analysis or modifications without having looked at a single query. Using this method, the time required to modify and/or analyse queries can be dramatically reduced.

Although, the invention described herein has been described herein with reference to the EURO, it may be applied to any similar currency system that is created. Accordingly, the use of the word EURO is to be construed accordingly and not understood to be limited to the EMU currency system.

It will he apparent to anybody skilled in the art that a variety of programming methods may he used to write the hereinbefore described embodiments into one or more software programs.

The words "comprises/comprising" and the word "having" when used herein with reference to the present invention are used to specify the presence of stated features, integers, steps or components but does not preclude the presence or addition of one or more other features, integers, steps, components or groups thereof.

## Claims

1. A method for performing currency calculations on a computer system wherein at least one exchange rate is retrieved from an exchange rate storage means, characterised in that the method further comprises the following steps;
a) storing the retrieved rate in a rate variable,
b) storing transaction details for the rate variable in a dynamic table,
c) retrieving the transaction details for the rate variable from the dynamic table when the rate is required for a calculation,
d) determining an appropriate calculation method using the transaction details, and
e) performing said appropriate calculation method.

2. A method according to Claim 1, wherein the exchange rate storage means is a currency rates module, an exchange rate table or a field within a data or display file.

3. A method according to Claims 1 or 2, wherein one dynamic table is used for storing the transaction details of all rate variables in a program.

4. A method according to any preceding Claim, wherein the transaction details include at least one of the following; the 'FROM' currency, the 'TO' currency, the rate variable name, the date of the transaction, the type of exchange rate, the company code, the exchange rate itself, the date format, the 'FROM' currency used to access the exchange rate storage means, the 'TO' currency used to access the exchange rate storage means.

5. A method according to any preceding Claim, wherein the determination of an appropriate calculation method includes a reference to a rules module, said rules module containing a set of rules for deciding an appropriate calculation method.

6. A method according to Claim 5, wherein the rules module comprises a modifiable table indicating whether a currency has joined a currency system (e.g. EMU)

7. A method according to Claim 6, wherein the modifiable table includes the dates of the transition period of any currency which has joined the currency system.

8. A system for performing currency calculations comprising a computer system comprising means for retrieving an exchange rate from an exchange rate storage means and means for storing a retrieved rate in a rate variable, characterised in that the system further comprises;
a) a dynamic table, means for storing transaction details for the rate variable in the dynamic table,
b) means for retrieving the transaction details for the rate variable from the dynamic table when the rate is required for a calculation,
c) means for determining an appropriate calculation method using the transaction details, and
d) means for performing said appropriate calculation method.

9. A system according to Claim 8, wherein the exchange rate storage means is a currency rates module, an exchange rate table or a field within one or more data or display files.

10. A system according to Claims 8 or 9, wherein one dynamic table is used for storing the transaction details of all rate variables in a program.

11. A system according to any of Claims 8 to 10, wherein the transaction details include at least one of the following; the 'FROM' currency, the 'TO' currency, the rate variable name, the date of the transaction, the type of exchange rate, the company code, the exchange rate itself, the date format, the 'FROM' currency used to access the exchange rate storage means, the 'TO' currency used to access the exchange rate storage means.

12. A system according to any of Claims 8 to 11, wherein the means for determining an appropriate calculation method includes a rules module, said rules module containing a set of rules for deciding an appropriate calculation method.

13. A system according to Claim 12, wherein the rules module comprises a modifiable table indicating whether a currency has joined a currency system (e.g. EMU).

14. A system according to Claim 13, wherein the modifiable table includes the dates of the transition period for any currency which has joined a currency system.

15. A system according to any of Claims 8 to 15, wherein the means for performing the appropriate calculation is a function or subroutine.

16. A method for converting a non EURO compliant program into a EURO compliant program comprising the steps of;
a) identifying rate variables in the program code which store currency rate values,
b) locating first positions in the program code where currency exchange rate values are passed to a rate variable, each of said first positions having a corresponding rate variable,
c) inserting storage code at each of said first positions, said storage code for storing the variable names of the corresponding rate variable and the rate variables corresponding transaction details in a dynamic table,
d) locating second positions in the program code where calculations using a rate variable occur, each of said second positions having a corresponding rate variable, inserting retrieval code at each of said second positions, for retrieving the transaction details from said dynamic table for the rate variable corresponding to that position,
e) inserting determination code at each of the second positions, said determination code determining an appropriate currency conversion calculation method, and
f) inserting implementing code at each of said second locations for performing said appropriate currency calculation method.

17. A method according to claim 16, wherein the step of identifying rate variables in the program code which store currency rate values further comprises the step of searching data and display files to locate fields within these files that contain rate fields.

18. A method according to claim 17, wherein the step of searching data and display files includes the creation of an analysis file, and the inclusion of references in the analysis file identifying rate fields.

19. A method according to claim 18, wherein the step of locating first positions in the program code adds references to the analysis file identifying rate fields.

20. A method according to Claims 18 or 19, further comprising the step of creating an analysis file, and wherein the step of locating first positions in the program code add references to said analysis file identifying rate fields.

21. A method according to any of claims 18 to 20, further providing for manual alteration of the analysis file to correct errors.

22. A method according to any of claims 18 to 21 wherein the step of locating first positions in the program uses the analysis file to determine locations where a rate is obtained and stored as a variable.

23. A method according to any of claims 17 to 22, wherein the identification of rate fields is performed before the step of locating said first positions in the program code.

24. A method according to any of claims 16 to 24, wherein the step of inserting storage code at each of said first positions may include the insertion of a function or call to a sub routine to store the variable name of the corresponding rate variable and its corresponding transaction details in the dynamic table.

25. A method according to any of claims 16 to 24, wherein the fields, variables, or parameters identifying the corresponding transaction details are obtained from parameters passed to an exchange rate table.

26. A method according to any of claims 21 to 29, wherein fields identifying the corresponding transaction details are obtained from fields associated with the field from which the rate was obtained.

27. A method according to claim 26, wherein associated fields are identified in an associations table or file.

28. A method according to any of claims 16 to 27, further comprising the additional step of inserting code at or close to the start of the program to create a dynamic table for storing details of rate variables.

29. A method according to any of claims 16 to 28, further comprising the creation of a rules module is created, to which reference is made by the determination code to determine an appropriate calculation method.

30. A system for converting a non EURO compliant program consisting of program code into a EURO compliant program, comprising a computer having
a) means for identifying rate variables in the program code which store currency rate values,
b) means for locating first positions in the program code where currency exchange rate values are passed to a rate variable, each of said first positions having a corresponding rate variable,
c) means for inserting storage code at each of said first positions, said storage code which stores the variable names of the corresponding rate variable and the rate variables corresponding transaction details in a storage location,
d) means for locating second positions in the program code where calculations using a rate variable occur, each of said second positions having a corresponding rate variable,
e) means for inserting retrieval code at each of said second positions, which if run retrieves the transaction details from said storage location for the rate variable corresponding to that position,
f) means for inserting determination code at each of second positions, said determination code determining an appropriate currency conversion calculation method, and
g) means for inserting implementing code at each of said second locations to enable said appropriate currency calculation method.

31. A system according to claim 30, wherein the means for identifying rate variables in program code includes searching means for initially searching data and display files to locate fields within these files that contain rate fields.

32. A system according to claim 31, further comprising means for creating of an analysis file, said analysis file containing identifiers of fields which are rate fields.

33. A system according to claim 32, wherein the means for locating first positions in the program code adds to the analysis file identifying fields which are rate fields.

34. A system according to any of claims 30 to 33, wherein the system is arranged so that identification of rate fields is performed before location of the first positions in the program.

35. A system according to any of claims 30 to 34, further comprising alteration means to allow manual alteration of the analysis files to correct for any errors.

36. A system according to any of claims 32 to 35, wherein the means for locating first positions in the program refers to the analysis file to determine locations where a rate is obtained and stored as a variable.

37. A system according to any of claims 30 to 36, wherein obtaining means are inserted in the program code enabling the fields, variables, or parameters identifying the corresponding transaction details to be obtained from parameters passed to an exchange rate table or from fields associated with a field in a data/display from which the rate was obtained.

38. A system according to any of claims 30 to 37, further comprising additional means for inserting code at or close to the start of the program code to create a dynamic table for storing details of rate variables.

39. A system according to any of claims 30 to 38, further comprising for creating rules, to which reference may be made by the determination code to determine an appropriate calculation method.

40. A computer program product comprising a computer usable medium having computer readable program code embodied therein, the computer readable program code directly loadable into the internal memory of a digital computer for performing the steps of the methods claimed in any of claims 1 to 7.

41. A computer program product comprising a computer usable medium having computer readable program code embodied therein, the computer readable program code directly loadable into the internal memory of a digital computer for performing the steps of the methods claimed in any of claims 16 to 29.

42. A computer data signal, embodied in a carrier wave, having computer readable program code embodied therein, the computer readable program code loadable into the internal memory of a digital computer for performing the steps of the methods claimed in any of claims 1 to 7.

43. A computer data signal, embodied in a carrier wave, having computer readable program code embodied therein, the computer readable program code loadable into the internal memory of a digital computer for performing the steps of the methods claimed in any of claims 16 to 29.
